# EUROPEAN PATENT APPLICATION

(11) **EP 1 146 724 A1**
(43) Date of publication of application: **17.10.2001**
(21) Application number: 01302615.8
(22) Date of filing: 21.03.2001
(51) Int. Cl.: H04N 1/40, H04N 1/00

(54) **Method and apparatus for controlling scan conditions**

(30) Priority: 13.04.2000 GB 0009135
(71) Applicant: Fujifilm Electronic Imaging Limited, Hemel Hempstead, Herts, HP2 7RH (GB)
(72) Inventor: Bromley, Nigel Ingram, Milton Keynes, Bucks NK8 9EL (GB)
(74) Representative: Skone James, Robert Edmund

(57) **Abstract**

An automatic scanning system (1) has a scanner (2) having a detector (9) with a detector dynamic range, the detector (9) being arranged to monitor a dynamic range of a scan area. An exposure controller (11) is arranged to compare the dynamic range of the scan area with the detector dynamic range of the scanner. The exposure controller (11) determines a minimum scan exposure time based upon the comparison, such that the dynamic range of the scan area is equal to or lies within the detector dynamic range of the scanner (2).

## Description

This invention relates to a method and apparatus for automatically controlling the scan conditions in a scanner.

Scanners are widely used for converting information visibly recorded on a medium into electronic data for either later processing as a digital image or conversion into other forms such as in optical character recognition.

Scanners make take a number of forms. For example, one common type is the "flat-bed" scanner in which a scan head scans across a medium such as a document or photograph arranged on a flat surface. The scan head typically contains a light source and a light sensitive reading device. The light sensitive device is often a charge-coupled device (CCD) array in which a large number of light sensitive elements are arranged side-by-side normal to the direction of the scan. Generally, the number of CCD elements is sufficient to cover the full width of the desired scan.

The best use of the range of sensitivity of the CCD is made when the highest intensity light received from the scanned area is arranged to cause the output of the CCD to be just below the CCD saturation level.

The calibration of the highest intensity level can be achieved in two ways, either by adjusting the amount of light illuminating the original image, or by adjusting the exposure time.

Because the scanner must "dwell" on each line to be scanned for the exposure time, a longer exposure time will result in a longer overall scanning time. It is desirable to minimise the scanning time in order to maximise the productivity of the scanner.

However, it is often impractical to increase the illumination level as light sources are generally operated at their maximum intensity. Furthermore increased illumination requires more power and produces more heat which may have an adverse effect upon the apparatus.

A compromise is often required between, on the one hand operating the scanner at less than maximum speed using the full range of the CCD, and running the scanner at maximum speed but failing to use the full CCD range. This choice may be offered to the user as a "quality" or "productivity" control.

The user's decision as to whether to compromise quality or productivity is often determined by the quality of the image to be scanned. A good quality CCD scanner may have a saturation output level that is 10000 times the minimum level detectable above noise. This is termed the "dynamic range" and may be expressed as 10000:1. Conventionally in the art, base 10 logarithms are used such that 10000 is represented as a dynamic range of 4.

High quality photographic images may contain a full range of greyscale between white and black. However, many images are confined within part of such a scale, for example printed matter may often have a maximum output level only 100 times that of the minimum output level (a dynamic range of 2).

Some scanners allow the user to alter the scan conditions such that the full dynamic range of the scanner is not used. However, if a scan is performed where the detector dynamic range of the scanner is less than that required by the image, the results will be of low quality.

In accordance with a first aspect of the present invention, we provide a method of automatically controlling the scan conditions for an area to be scanned in a scanner having a detector with a detector dynamic range, the method comprising:
pre-scanning a scan area;
monitoring a dynamic range of the scan area;
comparing the monitored dynamic range of the scan area with the detector dynamic range of the scanner; and
determining a minimum scan exposure time based upon the comparison, such that the dynamic range of the scan area is equal to or lies within the detector dynamic range of the scanner.

The present invention therefore provides a method of automatically setting the scan conditions to reduce the time taken to perform a scan only when appropriate, with no loss in output quality. This is achieved by using only part of the detector dynamic range of the scanner when the full range is not required by the image.

Rather than relying upon the operator's judgement to manually alter the scan conditions, it is desirable therefore to adjust the scan conditions automatically depending upon the image quality, such that greater scan speeds may be used only when appropriate.

Although the present invention is suitable for use in association with a flat-bed scanner, it may be applied to any one of the number of scanner configurations known in the art.

Preferably the dynamic ranges of the scanner and of the scan area are dynamic ranges of light intensity. The term "light" is intended to include not only visible but also non-visible parts of the electromagnetic spectrum such as ultra-violet light and infra-red light.

The present invention is applicable to both black and white scanners (having a detectable grey-scale) and colour scanners.

The detector dynamic range of the scanner may be defined between a high intensity level and a low intensity level. The high intensity level is preferably determined by a light intensity level which causes saturation of the detector arranged to monitor the light intensity. The high intensity level may be arranged to be not greater than this saturation light intensity level. At the other end of the dynamic range, the low intensity level may be arranged to be not less than a detectable light level representing a noise level for the apparatus in question.

Preferably, the dynamic range of the scan area is bounded by a low scan area level and a high scan area level. These may be defined as the extremes of the received intensity range, or alternatively may represent the extremes of a cut-off intensity distribution.

A reduction in the exposure time resulting in substantially no loss in image quality can then be achieved by comparing the high and low scan area levels with the high and low intensity levels of the scanner detector dynamic range.

In general, for each scan to be performed, the scanner system is calibrated such that the highest possible intensity of light received for a particular illumination intensity is not greater than the light intensity level at which the detector saturates. A "white balance area" may be provided which represents the purest white intensity that may be reasonably expected to be found in an area to be scanned. In this case the exposure time of the scanner may be arranged such that the intensity level of light received from the white balance area is not greater than the saturation intensity level.

As the noise level is a known characteristic of the system given the white balance data, the scanner may be calibrated such that the detector dynamic range is bounded by a low level representing black and a high level representing white.

It will be appreciated that exact coincidence of the saturation level with the high intensity level, and the noise level with the low intensity level may not always be desired. These high and low levels may be offset slightly to narrow the detector dynamic range, thereby ensuring that the full range of intensity including the high and low end points may be confidently detected. It is understood in the following description that the minimum calculated exposure time may be based upon such a range, offset at one or both ends.

As the scan resolution, velocity and area may differ between a pre-scan and a subsequent "final" scan, an adjustment to the exposure time is sometimes required. The difference between the corresponding settings of the pre-scan and the final scan may be taken into account when calculating the minimum exposure time.

At a particular illumination intensity, typically the exposure time of the scanner and the light intensity levels detected will be related by a predetermined relationship. This relationship may be represented within the scanner system by any known method, for example using an algorithm or a look-up table. The minimum scan exposure time may be determined by comparing the low scan area level of the scan area dynamic range with the low intensity level of the scanner's detector dynamic range and determining the minimum scan exposure time according to the predetermined relationship. In this way, the low scan area level is arranged to be no less than the low intensity level which may represent noise within the system.

Similarly, the high scan area level may be compared with the high intensity level of the scanner to ensure that the dynamic range of the scan area will be equal to or lie within the dynamic detectable range of the scanner.

Preferably for visible light scanners the detector will be a charge-coupled device (CCD) and in such a case the monitored light intensity is proportional to the light intensity incident upon the detector multiplied by the exposure time. CCDs are convenient in that they provide an approximate linear relationship between exposure time and light intensity which is beneficial to the calculation of a minimum scan exposure time.

Following the calculation of the minimum exposure time, the final scan may be performed by scanning the area to be scanned using the minimum scan exposure time.

In this way, the overall scan time is reduced as is the power consumption, by requiring the light source to be illuminated for a shorter period.

In accordance with a second aspect of the present invention, we provide an automatic scanning system comprising:
a scanner having detector with a detector dynamic range, the detector being arranged to monitor a dynamic range of a scan area; and
an exposure controller arranged to compare the dynamic range of the scan area with the detector dynamic range of the scanner, and to determine a minimum scan exposure time based upon the comparison, such that the dynamic range of the scan area is equal to or lies within the detector dynamic range of the scanner.

The system advantageously determines the minimum scan exposure time for an image to be scanned automatically, which results in substantially no loss of quality in the scanned image.

Preferably the system further comprises a first store for storing data for relating the exposure time of the scanner to the light intensity level monitored by the detector. Such data may comprise a look-up table, parameters for use in an algorithm, or indeed any data suitable for use with a method of relating the exposure time to the monitored light intensity level.

Preferably the detector dynamic range of the scanner will lie between a low light intensity level and a high light intensity level, the low light intensity level being not less than a noise level and the high light intensity level being not greater than a saturation level of the detector.

A personal computer provides suitable apparatus for forming part of the system and may be arranged as the exposure controller and/or the store.

An example of an apparatus and method according to the present invention will now be described with reference to the accompanying drawings, in which:-
Figure 1 is a schematic illustration of an automatic scanning system according to the example;
Figure 2 is a flow diagram of the operation of the system according to the example; and,
Figure 3 is an illustration of the dynamic ranges of various images A to D.

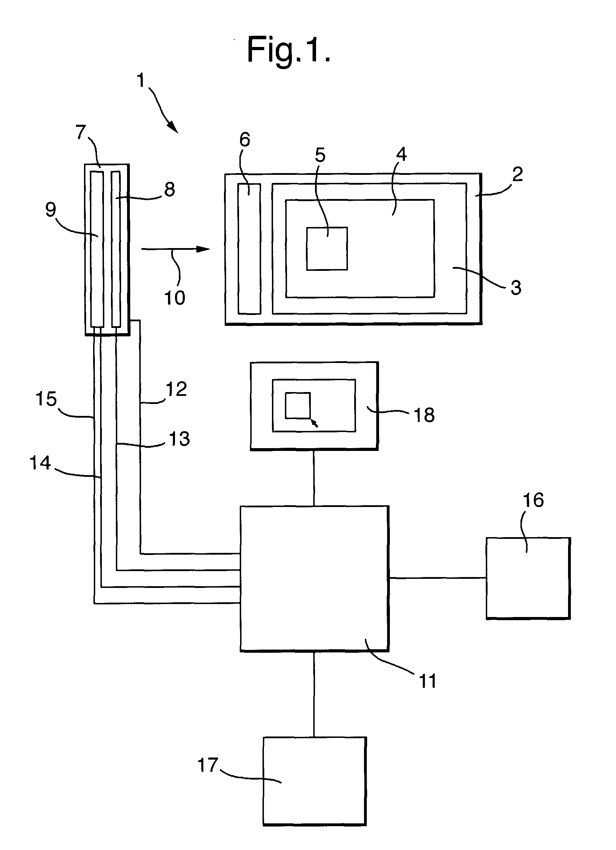

Figure 1 shows an example of a scanner system generally indicated at 1. A flat-bed scanner 2 is provided having a platen 3 upon which the medium to be scanned is placed. Figure 1 shows a representation of the scanner 2 as viewed from inside the scanner beneath the platen 3 looking upwards.

The medium to be scanned in this case is a document 4 placed upon the platen which contains a scan area 5, an image of which is to be reproduced by the scanner. Adjacent the platen is positioned a white balance area 6 which is arranged to be white in colour, such that the white balance area 6 is scanned before the scan area 5.

A similar black balance area coloured matt black may also be provided but in the present example the function of a black balance area is achieved by turning off the light source of the scanner.

A scan head 7 contains a light source 8 of a form conventional in the art for illuminating the scan area 5 and document 4 during the scan process. The scan head 7 is also equipped with a CCD array so as to receive light reflected from the scan area 5 as the scan proceeds.

The scan head 7 is movable in a direction indicated by the arrow 10 passing across the white balance area 6 and the full dimension of the platen 3 of the scanner 2 and in doing so, illuminating both from beneath.

Although in the present example, a reflected light detection system is used, equally for partially transparent images such as photographic negatives, a transmitted light detector system can be used where the white balance area 6 would simply be arranged to be a transparent area. In such a case, the CCD array would be disposed on the opposite side of the platen to the light source 8.

The motion of the scan head 7 along with the operation of the light source 8 and the charge-coupled device (CCD) array 9 are controlled by a processor 11. The processor may be provided within the scanner or as part of a separate system such as a personal computer. The movement of the scan head, the light source and the CCD array are controlled by three separate control lines 12,13,14 respectively. In addition, the data representing the intensity of the light received by the CCD array is transmitted to the processor via a data bus 15.

The processor 11 of the present example is connected to a store 16 which is arranged to store the image data received from the CCD array via data bus 15, either in raw or processed form. In addition, the processor is provided with a second store 17 which may form part of the first store. The store 17 contains data such as the scanner parameters along with other data such as exposure times. The store 17 may also contain data for a look-up table or parameters for an algorithm relating the exposure times of the scanner to the intensity of the light received by the CCD array as represented by the data delivered by the data bus 15.

A display 18 enables the image data to be displayed to the user of the system. This allows the system to be controlled using a conventional mouse and pointer method. The user may also select a part of the scan area upon which a final scan is performed.

The scan head contains suitable electronics to convert the received analogue signals from each element within the CCD array into serial digitized data signals representing the light intensities received at each array element in turn. These are transmitted to the processor using the data bus 15. Conventionally, the conversion may be achieved for example using standard electronic circuitry having a shift register and analogue-to-digital converter.

Each element in the CCD array 9 records image data by cumulative electric charging as a result of incident light received at the element over a time period. A signal representing the level of charge generated is then passed to processing electronics and the element is discharged before beginning the process again for the next scan line. The charging operation of each element within the CCD array occurs simultaneously such that the light intensity is measured along the line of CCD elements at once. This forms a scan line.

Typically the charging time of the CCD array for one line is a few milliseconds, for example 10 milliseconds. The resolution of the scanned image in the direction of travel of the scan head, is therefore determined by the number of lines scanned per unit length of travel. In a conventional pre-scan such a resolution may typically be six lines per mm whereas a final scan may have a resolution of up to 100 lines per mm or more.

The total time required to perform a scan is therefore dependent upon the time required to scan each line (the exposure time) and the total number of lines scanned. If the dynamic range of the scan area is less than that of the scanner then incomplete charging of the CCD array elements may be used even for the highest intensity regions of the scan area, thus reducing the charging time with no loss in image quality. The exposure time may therefore be reduced with respect to an exposure time in which complete charging would occur for these regions. This has the effect of reducing the total time required to perform the scan.

In principle of course the scan head could be maintained stationary whilst the charging operation takes place, however in general the scan head is moved smoothly across the platen. The pre-scan may therefore be achieved at higher speeds as less data is required per unit length along the scan direction.

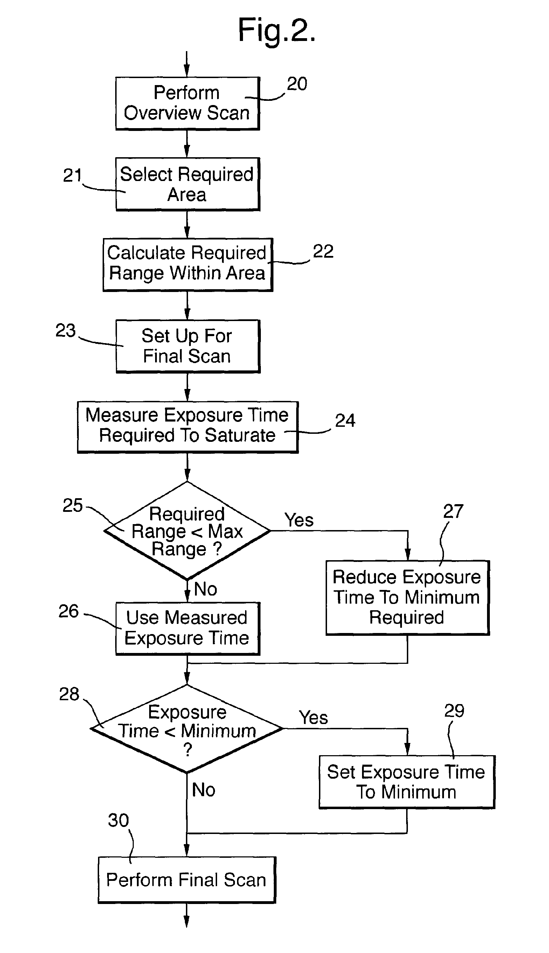

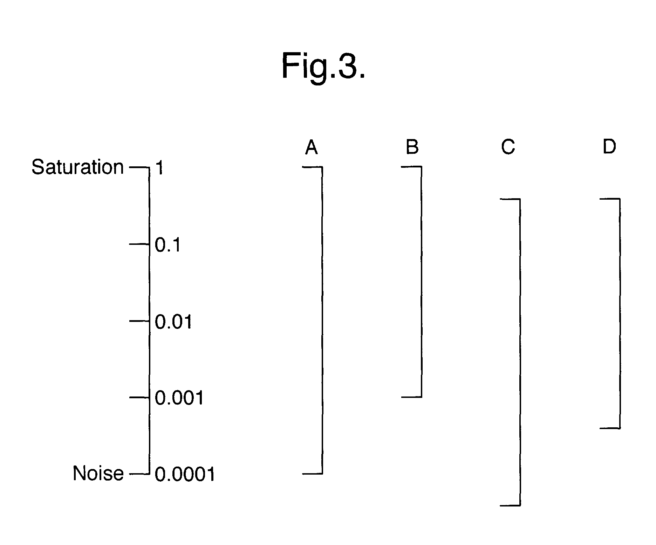

A method of automatically determining the minimum scan exposure time in the scanner system 1 will now be described with reference to Figures 2 and 3.

The user initiates a pre-scan of the document 4 under the control of a computer containing the processor 11, stores 16,17 and the display 18.

The pre-scan is an overview scan as shown at step 20 of Figure 2. A pre-scan is generally used such that the document as viewed by the scanner may be represented on a computer display and the user is able to check that the area to be scanned is visible and correctly oriented. The pre-scan is often of the whole scan area and is used by the operator to select which parts of that area relate to the actual area to be scanned. The exposure time for the pre-scan is pre-defined within the system. Pre-scanning is usually performed with a relatively small number of scan lines per unit length, which enables the scan to be performed quickly.

However, in the present example, the pre-scan has a second purpose in that the pre-scan data is used to estimate the range of intensities expected to be received from the scan area in the subsequent "final" scan. Although the pre-scan generally takes fewer samples of the scan area than does a higher resolution "final" scan, the amount of data received is nevertheless sufficient to make a dynamic range estimate.

To perform a pre-scan, the processor 11 operates the scan head 7 and moves the scan head in the direction 10 across the platen. During this process the light source 8 illuminates the document 4 and the intensity of the reflected light is monitored by the CCD array 9 and converted into data which is transmitted via the bus 15 to the processor 11.

The processor controls the speed of travel across the platen in accordance with the exposure time set for the CCD array.

Once the data has been received from the CCD array, it may then be stored in the store 16 for processing. An image constructed from the received data is presented to the user on the display 18.

At step 21 in Figure 2, the user selects an area of the image in which the final scan is to be performed. This may be achieved as is known in the art by defining a box enclosing the selected area using the mouse and pointer system. Such a defined area 5 is shown in Figure 1 represented on the display 18.

The data representing the area 5 are then retrieved from the store and the processor analyses the range of intensities monitored within this area. The processor 11 analyses the distribution of the received intensities and defines an upper scan area level and a lower scan area level. These may in some systems represent the extremes of intensity within the data of area 5. However, in the present example they define the limits of the intensity distribution that has been cut off, such that for example 99.98 percent of the received intensity data lies within the range between the lower and upper scan levels, defining a dynamic range.

Referring now to Figure 3, a dynamic range between a minimum noise level in the CCD array and the maximum saturation level of the array is shown with respect to four pre-scanned images having dynamic ranges labelled A to D.

In image A, the maximum intensity received in the pre-scan is approximately four decades larger than the minimum intensity. Therefore, for such an image, in order to record the full range of grey-scale including pure black and pure white, the full detector dynamic range of the scanner is required.

In contrast, image B has a dynamic range of approximately 3. This may be the case when, using the exposure time of the pre-scan, the image contains less heavy shadows than are possible to detect with the scanner.

Image C on the other hand, has a similar dynamic range to that of image A and in this case it can be seen that because the maximum output level has not been set to that of the scanner, information regarding the darkest areas of the image has been lost in the system noise. In this case it would be necessary to ensure that the maximum intensity level in the image corresponds to the saturation level of the CCD array.

In contrast, image D has a similar dynamic range to that of image B and it can be seen that the maximum intensity level received from image D need not saturate the CCD array as the darkest shadows still may be detected above the noise level.

The position of each dynamic range of the images with respect to that of the scanner can be controlled by choosing an appropriate exposure time. Longer exposure times move the dynamic range of the image towards the saturation end of the scanner detector dynamic range and shorter exposure times towards the noise end. The dynamic range of the image may move beyond either end of the scanner range and therefore the choice of the exposure time is particularly important for images such as A and C having a large dynamic range.

The present invention however recognises that not all the images have a large dynamic range and many in fact are similar to the images B and D in which the dynamic range is considerably smaller than that of the scanner. Therefore for images such as these, a shorter exposure time can be selected such that the dynamic range of the image moves towards the lower "noise" end of the detector dynamic range of the scanner and yet no information will be lost as long as the image range still lies within that detectable by the scanner. It is this reduction of the exposure time which is calculated by the processor 11 for each scan area 5 selected by the user, such that substantially no image data is lost but the overall scan speed may be raised.

Returning now to Figure 2, once the user has selected the required area 5 at step 21, the dynamic range of this area is then assessed at step 22 using the data from the pre-scan. The dynamic range of the scan area may simply be calculated as the ratio of the upper scan area level with respect to lower scan area level.

The final scan is then set up at step 23 where parameters such as the scan resolution and scan area are initialised for the scanner. The scanner system is then calibrated such that the full dynamic range lies between intensity levels of pure black and pure white.

At step 24, the scan head is passed across the white balance area. The processor then analyses the data from the CCD elements as this area is traversed and sets the exposure time such that the CCD elements are charged to their approximate saturation levels at the end of each charging period. It may not be necessary to perform a similar calibration for the lower detectable level as this value may already be known.

With the maximum and minimum levels of the CCD output set to white and black respectively, the dynamic detectable range of the scanner is therefore calibrated. At step 25 this is then compared with the dynamic range as measured from the area 5. If it is determined that the scanned image requires the full dynamic range of the scanner then the measured exposure time determined at step 24 is then used for the subsequent scan (step 26).

Alternatively at step 27, as for a standard CCD array the output signal is proportional to the intensity multiplied by the exposure time, a simple calculation of the minimum exposure time is then performed such that the lower scan area level lies just above the noise level of the scanner. Alternative light sensitive devices may exhibit more complex relationships which may be represented with equations or even using a look-up table.

At step 28, the calculated minimum exposure time is compared with an absolute minimum exposure time as determined by various constraints of the scanner. The absolute minimum exposure time may be determined by the maximum possible scan speed of the scan head or the time necessary to process the intensity signals from the CCD.

If the calculated minimum exposure time is less than the absolute minimum, then the exposure time is set to that of the absolute minimum at step 29.

At step 30, the final scan is performed using the set exposure time and the data are processed by the processor 11 in accordance with the store 16.

For many final scan images, the minimum exposure time may therefore be reduced without losing scanned image quality. This in turn allows the overall time required for the scan to be reduced.

## Claims

1. A method of automatically controlling the scan conditions for an area to be scanned (5) in a scanner (2), the scanner having a detector (9) with a detector dynamic range, the method comprising:
pre-scanning a scan area (3) ;
monitoring a dynamic range of the scan area (3) ;
comparing the monitored dynamic range of the scan area with the detector dynamic range of the scanner (2); and
determining a minimum scan exposure time based upon the comparison, such that the dynamic range of the scan area is equal to or lies within the detector dynamic range of the scanner (2).

2. A method according to claim 1, wherein the dynamic ranges of the scanner and the scan area are dynamic ranges of light intensity.

3. A method according to claim 2, wherein the detector dynamic light intensity range of the scanner lies between a high intensity level and a low intensity level and wherein the detector (9) monitors the intensity of light received by the detector and wherein the high intensity level is not greater than the light intensity level at which the detector saturates.

4. A method according to claim 3, wherein the low intensity level is not less than a detectable light level representing a noise level.

5. A method according to claim 3 or claim 4, wherein the dynamic ranges of the scanner and the scan area comprise a number of discrete detectable intensity levels.

6. A method according to any of claims 3 to 5, wherein the exposure time of the scanner is arranged such that the intensity level of light received from a white balance area (6) is not greater than the high intensity saturation level.

7. A method according to any of claims 3 to 6, wherein the dynamic range of the scan area is bounded by a low scan area level and a high scan area level and wherein the minimum scan exposure time is determined by comparing the low scan area level with the low intensity level of the detector dynamic range of the scanner and determining the minimum scan exposure time according to the predetermined relationship such that the low scan area level is not less than the low intensity level.

8. A method according to claim 7, wherein the predetermined relationship is expressed as an algorithm or a look-up table.

9. A method according to any of claims 3 to 8, wherein the detector (9) is a charge-coupled device and wherein the monitored light intensity level is proportional to the light intensity incident upon the device multiplied by the exposure time.

10. A method according to any of the preceding claims, further comprising, following the determination step, scanning the area to be scanned using the minimum scan exposure time.

11. An automatic scanning system (1) comprising:
a scanner (2) having a detector (9) with a detector dynamic range, the detector (9) being arranged to monitor a dynamic range of a scan area; and
an exposure controller (11) arranged to compare the dynamic range of the scan area with the detector dynamic range of the scanner, and to determine a minimum scan exposure time based upon the comparison, such that the dynamic range of the scan area is equal to or lies within the detector dynamic range of the scanner (2).

12. A system according to claim 11, wherein the system further comprises a first store (17) for storing data for relating the exposure time of the scanner to the light intensity level monitored by the detector (9).

13. A system according to claim 12, wherein the data in the first store (16) comprises a look-up table or parameters for use in an algorithm.

14. A system according to any of claims 11 to 13, wherein the detector dynamic range of the scanner lies between a low light intensity level and a high light intensity level and wherein the low light intensity level is not less than a noise level.

15. A system according to claim 14, wherein the high light intensity level is not greater than a saturation level of the detector (9).

16. A system according to any of claims 11 to 15, wherein the detector (9) is a charge-coupled device.
